Europäisches Patentamt

European Patent Office

Office européen des brevets

(11) Publication number: **0 209 745**
**B1**

# (12) EUROPEAN PATENT SPECIFICATION

(45) Date of publication of patent specification: **18.10.89**

(51) Int. Cl.⁴: **B 23 K 20/00, A 47 J 36/02**

(21) Application number: **86108582.7**

(22) Date of filing: **24.06.86**

(54) **Process for manufacturing twin layer bottoms with filling of the hollow space.**

(30) Priority: **26.06.85 IT 2129585**

(43) Date of publication of application:
**28.01.87 Bulletin 87/05**

(45) Publication of the grant of the patent:
**18.10.89 Bulletin 89/42**

(84) Designated Contracting States:
**AT BE CH DE FR GB LI LU NL SE**

(56) References cited:
**AT-B- 327 642**
**GB-A- 340 402**
**US-A-3 173 202**

(73) Proprietor: **AMC International Alfa Metalcraft Corporation AG**
**Buonaserstrasse 30**
**CH-6343 Rotkreuz (CH)**

(72) Inventor: **Cartossi, Ferdinando**
**Via D.ssa di Genova, 39**
**I-28049 Stresa Novara (IT)**

(74) Representative: **Giambrocono, Alfonso, Dr. Ing. et al**
**Ing. A. Giambrocono & C. S.r.l. Via Rosolino Pilo 19/B**
**I-20129 Milano (IT)**

Courier Press, Leamington Spa, England.

## Description

Processes are known for the safe coupling of two heterogeneous materials, such, for instance, aluminium-stainless or copper-stainless.

Some difficulties are met when the above processes are applied to the production of containers and, particularly, of pots having a twin layer bottom; that is a stainless steel pots formed by a stainless steel main part having a bottom and a side wall, an intermediate filling layer of a good heat conducting metal and an external stainless steel covering layer applied to the bottom of said main mart.

Among said known processes an especially advantageous process is disclosed by the Italian Patent 965,732. With reference to the manufacturing of said twin layer bottom of a stainless steel pot, the process of said Patent comprises the following steps:

— externally locating a plate of said good heat conducting metal onto the bottom of said main part, the thickness of said plate being greater than the final thickness of said intermediate filling layer, the volume of said plate being equal to that of said intermediate filling layer;

— locating said stainless steel covering layer onto said plate, such that a peripheral band thereof extends toward the bottom of the main part and encircles the periphery of said plate;

— heating the bottom of the assembly to a temperature near but lower than the melting point of the metal of said plate;

— applying an impact pressure onto said bottom assembly in order to connect said covering layer permanently to the bottom of said main part, and to deform said plate to form the intermediate filling layer.

The main drawback of the above mentioned process is due to gases forming on the surface and remaining enclosed within the two layers, which prevent the safe metal coupling.

Several methods are tried to eliminate these inconveniences, but unsuccessfully; for instance either by making holes in the covering layer, which however are immediately closed as soon as the impact pressure is applied, or by working under vacuum, the latter being an operating condition extremely difficult to be carried out and maintained.

An object of the present invention is an improvement of the above process which allows to overcome the above described inconveniences and other too.

More particularly, the process according to the present invention is characterized in that:

— the initial thickness of said plate is at least 20 per cent greater than the final thickness of said intermediate filling layer; and

— in a first phase of the deformation of said plate said impact pressure is applied progressively from the center to the periphery of the bottom, and in a second phase the covering layer is externally restrained by a mould, the means for the application of said impact pressure are such that either the bottom of the covering layer or at least the bottom of the main part, or both, have in the finished pot a convexity directed towards the filling layer, the total camber of the convexity of the covering layer and the bottom of the main part is equal to or greater than 0.25% of the average diameter of the bottom of the pot in its final shape.

So, in the first phase which is mainly a deformation of said plate, the latter is pressed at first in the center and then, as the punch and the mould approach, towards the periphery; the metal of said plate undergoes a centrifugal pressure removing stepwise the gases and filling the whole space between the two stainless steel layers. Only at this point, that is with the mould in its final position, and with the covering layer well kept in the mould, the second phase starts: since the punch and the mould cannot approach closer, the remaining energy discharges as impact energy on the filling metal which is compressed from all sides: particularly at the peripheral band of said covering layer, strongly adhering to the two stainless steel parts, i.e. the covering layer and the main part of the pot.

A further advantageous characteristic consists in that a special shape may be given to said plate or to the convexities of the mould and of the punch, or both, so that the metal of said plate during its deformation from the center to the periphery reaches the upper part of the peripheral band of the covering layer simultaneously about the band.

One embodiment of the invention, in the form of a cylindrical pot, will now be described, by way of example only, with reference to the accompanying drawings in which:

Figure 1 shows a partial cross section of a pot having a twin layer bottom still located on the equipment used for its production;

Figure 2 shows a partial cross section of the main part of the pot of Figure 1 at the beginning of the first phase of the application of the covering layer;

Figure 3 is a cross section similar to that of Figure 2 in a more advanced phase;

Figure 4 is a cross-section, having a convexity exaggerated for sake of clarity, in a starting phase according to the present invention; and

Figure 5 is a cross-section, similar to Figure 4, of a finished pot.

With reference to these Figures, a finished pot includes a stainless steel main part 1, a stainless steel covering layer 2 and an intermediate filling layer 3 of a good heat conducting metal.

According to the process of the present invention, the main part 1, first undergoes the usual preliminary cleaning and degreasing operations as does the covering layer 2.

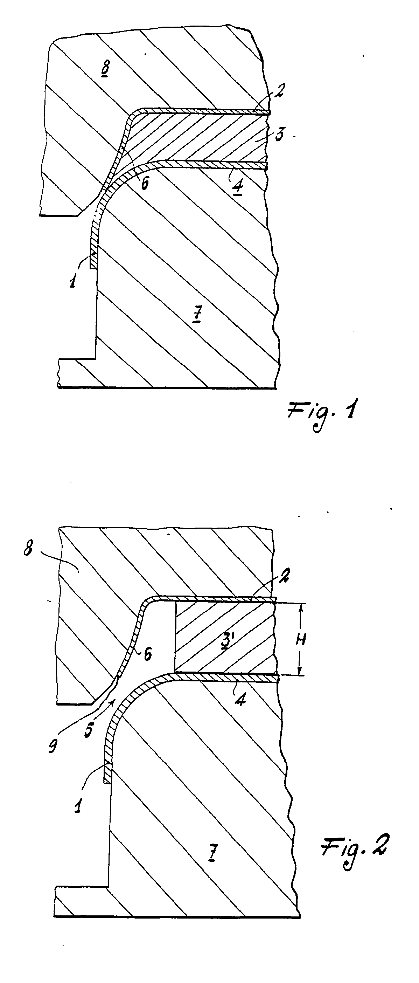

At the beginning of the process, the metal material that will form the filling layer 3 is in the form of one or more (stacked) plates 3' of a suitable shape, e.g. a disc-shape in the case of pots having a circular horizontal cross section. The size and, particularly, the thickness H of the disc or discs 3' (see Figures 2 and 4) are determined by the final result to be obtained, that is, the plate, or stack of plates, must have an initial thickness that is at least 20% greater than the final thickness of the intermediate filling layer 3 to be formed. The initial diameter of the plate or stack of plates 3' is also proportionally smaller than the final diameter of the intermediate filling layer 3.

The plate or stack of plates 3' is positioned, centrally, on the bottom 4 of the main part 1 and the covering layer 2 is mounted over the plate or plates 3' so that a slit 5, best seen in Figure 2, is formed between a lower edge of a peripheral band 6 of the covering layer 2 and the external surface of the main part 1.

In order to obtain an easily handling device, the process is advantageously carried out according to the Italian Patent 965,732, by connecting together by welding the disc 3', the bottom 4 of the main part 1 and the covering layer 2, preferably with a welding point in their central region, preferably by resistance welding techniques.

The so obtained assembly is then heated in an oven, to a predetermined temperature suitable to the metal forming the disc 3', that is, as quoted in the above mentioned Italian Patent, a temperature near but lower than the melting point of said metal. For example, in the case of aluminium or its alloys, this temperature is maintained from 400° to 650°C.

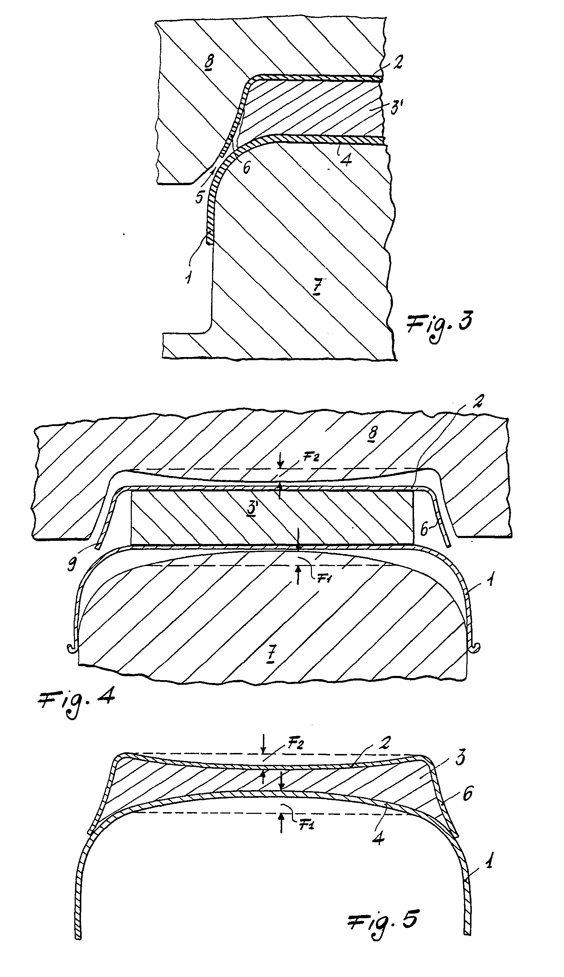

When the predetermined temperature is reached, the so prepared assembly is located on a fixed punch 7 whose upper part has a suitable predetermined convexity and is fixed on the plane of a press (not shown). A corresponding mobile mould 7 which also has a predetermined convexity, is fixed to the stroking mass of this press. Each convexity has a camber $F_1$ and $F_2$ respectively (Figure 5) and their sum $F=F_1+F_2$ is selected in dependence upon the diameter of the bottom 4 of the pot 1 and, specifically, to be at least 0,25% of said diameter. In practice, for a diameter of 200 mm, the total convexity is at least 0.5 mm. This total value can be divided between $F_1$ and $F_2$ or given to only one of them.

With the assembly located in the press, between the mould 8 and the punch 7, an impact pressure produced by a walking beam wherein the stroking mass is provided with an acceleration, is applied to the mobile mould 8.

At the beginning of the deformation phase (see Figure 2) under the impact effect, pressure is applied only on the central part of the disc or discs 3' and, due to the above mentioned convexity of the mould and/or the punch, the metal of said disc spreads out gradually towards its periphery. In such a way, said metal comes into contact progressively with the stainless steel layers 2 and 4, and any gas between the layers can vent through the slit 5 (Figure 3).

It is important to note, in fact, that the above mentioned convexity during the application of the impact pressure causes a centrifugal effect on the gases or other materials which are occluded between the metallic layers 2, 3, 4 forming the pot bottom. Furthermore, this convexity exerts on the metal of the deformed disc 3' an effect of centrifugal expansion facilitating the expulsion of gases.

The process proceeds by a gradual expulsion of the gases (Figure 3) until said material of the disc 3' is deformed (its volume having been suitably calculated) to fill the whole cavity between the main part 1 and the covering layer 2, and the lower edge of the peripheral band 6 of the covering layer comes into contact (or almost) with the main part 1 reaching in this way the form illustrated in Figure 1.

Clearly according to the correct application of the process, the lower edge of the band 6 will contact the surface of the main part 1 simultaneously or just after the metal of the deformed disc 3' has completely filled all the available space.

At this moment, the deformation phase is over and the residual energy (which is the main part of the initial energy) of the stroking mass discharges with impact on the assembly resulting in a close coupling and a molecular co-penetration of the three layers 2, 3, 4 as in the above mentioned Italian Patent 965,732.

It is to be noted that, due to the convexity of the mould and/or the punch, the metal of the disc 3', besides being compressed and intimately connected with the stainless steel layers 2 and 4, undergoes a centrifugal deformation compressing and pushing them violently against the peripheral band 6 of the covering layer 2, which is kept by the mould 8 in its final position; therefore a close coupling and a molecular co-penetration are assured also between the peripheral band 6 of the covering layer 2 and the periphery of the deformed disc 3'.

The process represents a remarkable improvement over the results achievable with other processes for the formation of twin layer bottoms, for instance with the usual brazing process.

The close coupling between the intermediate filling layer 3 and the twin stainless steel layers (2, 4) over total contact surfaces, including the peripheral edges, is particularly suitable for the production of kitchen pots, where the main efforts are devoted to obtain the monolithicity of the pot for heating-transmission and hygienic reasons.

A further advantage over other processes for the formation of pots with twin layer bottoms, is the possibility to achieve the desired shape to the covering layer by the mould containing it during the application of the impact pressure.

A further advantage consists in that the thermoradiating bottom of the pot so obtained may be formed with an external cavity able to compensate the dilatation caused by the future contact with heating sources: the size of this cavity can be suitably calculated, according to the limits of the process, so that perfect flatness of the bottom, once heated, is assured.

The above process has been described with reference to a pot having a circular cross section wherein the disc (or discs) 3' is normally circular, its periphery following the profile of the pot, and obviously have a diameter smaller than that of the pot. In practice, the mould 8 and punch 7 have generally a spherical cap shape.

In case of pots having a non circular horizontal cross section, it is advisable to operate the process so that the metal of the intermediate filling layer reaches, during its centrifugal deformation, the band 6 at the same time over the whole perimeter.

To this end, it is possible to operate either maintaining punch 7 and/or mould 8 in the shape of a portion of a spherical cap, and suitably shaping the filling metal, arranging it in different sizes on the various horizontal axes with respect to the periphery of the pot bottom (therefore its edge does no longer follow the periphery of the pot bottom), or acting on the curvature of the mould and maintaining the edge of the filling metal so as to follow the periphery of the pot bottom (or, obviously, by both).

The above example illustrates a particular shape of a twin layer bottom, but the invention is achievable to all the possible different forms both of the twin layer bottom and of the container, being all of them object of the invention.

## Claims

1. A process for manufacturing a twin layer bottom of a stainless steel pot, said pot being formed as an assembly of a stainless steel main part (1) having a bottom (4) and a side wall, an intermediate filling layer (3) of a good heat conducting metal and an external stainless steel covering layer (2) applied to the bottom of said main part, which process comprises the steps of:
— externally locating a plate (3') of said good heat conducting metal onto the bottom (4) of said main part (1), the thickness of said plate being greater than the final thickness of said intermediate filling layer (3), the volume of qaid plate being equal to that of said intermediate filling layer;
— locating said stainless steel covering layer (2) on said plate (3'), such that a peripheral band (6) thereof extends towards the bottom (4) of the main part (1) and encircles the periphery of said plate;
— heating the bottom of the assembly to a temperature near but lower than the melting point of the metal of said plate (3');
— applying an impact pressure onto said bottom assembly in order to connect said covering layer (2) permanently to the bottom (4) of said main part (1), and to deform the plate (3') to form the intermediate filling layer (3), characterized in that:
— the initial thickness of said plate (3') is at least 20 per cent greater than the final thickness of said intermediate filling layer (3); and
— in a first phase of the deformation of said plate (3') said impact pressure is applied progressively from the center to the periphery of the bottom and in a second phase the covering layer is externally restrained by a mould (8), the means for the application of said impact pressure are such that either the bottom of the covering layer (2) or at least the bottom (4) of the main part (1), or both, have in the finished pot a convexity directed towards the filling layer (3), the total chamber of the convexity of the covering layer (2) and the bottom (4) of the main part (1) is equal to or greater than 0.25% of the average diameter of the bottom of the pot in its final shape.

2. A process according to claim 1, wherein the impact pressure is applied through a punch (7) inserted into said main part (1) and a mould (8) having the same profile of said covering layer (2) in its finished status, either said plate (3') or the convexities of said mould and punch, or both, being given a profile so that the filling metal of said plate in its progressive deformation from the center to the periphery reaches the upper part of said peripheral band (6) of said covering layer at the same time on all said band.

## Patentansprüche

1. Verfahren zur Herstellung eines Doppelschichtbodens eines Topfes aus rostfreiem Stahl, der aus einem Hauptteil (1) aus rostfreiem Stahl mit einem Boden (4) und einer Seitenwand, einer Zwischenschicht (3) aus einem gut wärmeleitenden Metall und einer äußeren Deckschicht (2) aus rostfreiem Stahl besteht, welche Deckschicht auf den Boden des Hauptteiles aufgebracht ist, wobei das Verfahren folgende Schritte aufweist:
— eine Platte (3') aus gut wärmeleitendem Metall wird auf den Boden (4) des Hauptteiles (1) aufgebracht, wobei die Stärke dieser Platte größer als die Endstärke der Zwischenschicht (3) ist, das Volumen der Platte gleich dem Volumen der Zwischenschicht ist;
— die Deckschicht (2) aus rostfreiem Stahl wird auf der Platte (3') derart angeordnet, daß sich ein Randstreifen der Deckschicht gegen den Boden (4) des Hauptteiles (1) erstreckt und den Rand der Platte eingrenzt;
— der Boden der Gruppe wird auf eine Temperatur aufgeheizt, die nahe dem Schmelzpunkt des Metalles der Platte (3') liegt, aber niedriger als dieser Schmelzpunkt ist;
— auf die Bodengruppe wird ein Stoßdruck aufgebracht, um die Deckschicht (2) ständig mit dem Boden (4) des Hauptteiles (1) zu verbinden und um die Platte (3') zur Zwischenschicht (3) zu formen, dadurch gekennzeichnet, daß:
— die Anfangsstärke der Platte (3') ist mindestens 20% größer als die Endstärke der Zwischenschicht (3); und
— in einer ersten Phase der Verformung der Platte (3') wird der Stoßdruck fortschreitend von innen her zum Rand des Bodens aufgebracht und in einer zweiten Phase wird die Deckschicht außen durch eine Form (8) gefaßt, wobei zur Aufbringung einer solchen Stoßkraft entweder der Boden der Deckschicht (2), oder mindestens der Boden (4) des Hauptteiles (1), oder beide, beim fertigen Topf eine gegen die Zwischenschicht (3) gerichtete Konvexität aufweisen, und die gesamte Krümmung oder Pfeilhöhe der Konvexität der Deckschicht (2) und des Bodens (4) des Hauptteiles (1) gleich oder größer als 0,25% des mittleren Durchmessers des Topfbodens in seiner endgültigen Form beträgt.

2. Verfahren nach Anspruch 1, dadurch gekennzeichnet, daß die Stoßkraft durch einen in den Hauptteil (1) eingesetzten Stempel (7) und eine Form (8) aufgebracht wird, die das gleiche Profil wie die Deckschicht (2) in ihrem Endzustand aufweist, wobei entweder die Platte (3') oder die Konvexitäten der Form bzw. des Stempels oder beider ein derartiges Profil geben, daß das Füllmaterial der Platte bei ihrer fortschreitenden Verformung von der Mitte zum Rand den oberen Teil des Randstreifens (6) der Deckschicht an allen Stellen des Randstreifens gleichzeitig erreicht.

## Revendications

1. Procédé pour la fabrication d'un fond à double couche d'un pot en acier inoxydable, ledit pot étant constitué comme un assemblage d'une partie principale en acier inoxydable (1) comportant un fond (4) et une paroi latérale, d'une couche de remplissage intermédiaire (3) en métal bon conducteur de la chaleur, et d'une couche de recouvrement extérieure en acier inoxydable (2) appliquée au fond de ladite partie principale, ce procédé comprenant les opérations de:

application extérieure d'une plaque (3') dudit métal bon conducteur de la chaleur sur le fond (4) de la dite partie principale (1), l'épaisseur de ladite plaque étant supérieure à l'épaisseur finale de ladite couche de remplissage intermédiaire (3), le volume de ladite plaque étant égal à celui de ladite couche de remplissage intermédiaire;

application de ladite couche de recouvrement en acier inoxydable (2) sur ladite plaque (3'), de sorte qu'une bande périphérique (6) de la couche de recouvrement s'étend vers le fond (4) de la partie principale (1) et encercle la périphérie de ladite plaque;

chauffage du fond de l'assemblage à une température voisine mais inférieure au point de fusion du métal de ladite plaque (3');

application d'une pression d'impact sur ledit assemblage de fond afin de connecter ladite couche de recouvrement (2) de façon permanente au fond (4) de ladite partie principale (1), et de déformer la plaque (3') pour former la couche de remplissage intermédiaire (3), caractérisé en ce que:

l'épaisseur initiale de ladite plaque (3') est d'au moins 20% supérieure à l'épaisseur finale de ladite couche de remplissage intermédiaire (3); et

dans une première phase de la déformation de ladite plaque (3'), ladite pression d'impact est appliquée progressivement du centre vers la périphérie du fond et, dans une deuxième phase, la couche de recouvrement est limitée extérieurement par un moule (8), les moyens d'application de ladite pression d'impact sont tels que le fond de la couche de recouvrement (2) ou au moins le fond (4) de la partie principale (1), ou les deux, présentent dans le pot fini une convexité dirigée vers la couche de remplissage (3), la flèche totale de la convexité de la couche de recouvrement (2) et du fond (4) de la partie principale (1) étant égale ou supérieure à 0,25% du diamètre moyen du fond du pot dans sa configuration finale.

2. Procédé suivant la revendication 1, dans lequel la pression d'impact est appliquée par l'intermédiaire d'un poinçon (7) insére dans ladite partie principale (1) et d'un moule (8) ayant le même profil que ladite couche de recouvrement (2) dans son état fini, ladite plaque (3') ou les convexités dudit moule et dudit poinçon, ou les deux, ayant un profil tel que le métal de remplissage de ladite plaque dans sa déformation progressive du centre vers la périphérie atteint la partie supérieure de ladite bande périphérique (6) de ladite couche de recouvrement simultanément sur toute ladite bande.

Fig. 1

Fig. 2

*Fig. 3*

*Fig. 4*

*Fig. 5*